# EUROPÄISCHE PATENTSCHRIFT

(11) **EP 2 704 812 B1**
(45) Veröffentlichungstag und Bekanntmachung des Hinweises auf die Patenterteilung: **20.02.2019**
(21) Anmeldenummer: 12724887.0
(22) Anmeldetag: 26.04.2012
(51) Int. Cl.: B01D 29/52, B01D 29/66

(54) **FILTERVORRICHTUNG**
FILTERING APPARATUS
DISPOSITIF FILTRANT

(30) Priorität: 05.05.2011 DE 102011100518
(43) Veröffentlichungstag der Anmeldung: 12.03.2014
(73) Patentinhaber: Hydac Process Technology GmbH, 66538 Neunkirchen (DE)
(72) Erfinder: WNUK, Ralf, 66450 Bexbach/Kleinottweiler (DE); GERSTNER, Jörg, Hermann, 66346 Püttlingen (DE); BÖTTCHER, Thomas, 66557 Illingen-Hüttigweiler (DE); MORAWIETZ, Thomas, 66299 Friedrichsthal (DE)
(74) Vertreter: Bartels und Partner, Patentanwälte
(86) Internationale Anmeldenummer: PCT/EP2012/001772
(87) Internationale Veröffentlichungsnummer: WO 2012/150010

(56) Entgegenhaltungen:
- WO-A1-01/34274
- DE-A1- 1 801 441
- DE-A1- 4 030 084
- US-A- 3 283 903

## Beschreibung

Die Erfindung betrifft eine Filtervorrichtung mit den Merkmalen im Oberbegriff von Anspruch 1.

Eine in DE 10 2007 054 737 A1 offenbarte Filtervorrichtung ermöglicht einen kontinuierlichen Filtrationsbetrieb, wobei nacheinander Filterelemente, die zu regenerieren sind, rückgespült werden, während die Filtration über die restlichen Filterelemente fortgesetzt wird, so dass der Filtrationsbetrieb zu keiner Zeit unterbrochen wird.

Bei der bekannten Filtervorrichtung erfolgt der Rückspülvorgang nicht ausschließlich in der Weise, dass der in der Filtervorrichtung anstehende Systemdruck während der jeweiligen Rückspülphase einen Teilstrom des Filtrates das zu reinigende Filterelement in umgekehrter Richtung durchströmen lässt, um den Schmutz vom Element abzulösen und auszutragen, sondern dass, in dem Bestreben, auch hartnäckigere Verschmutzungen entfernen zu können, mittels einer Drucksteuereinrichtung an dem jeweils rückzuspülenden Filterelement ein Unterdruck erzeugt wird. Für die Rückspülung ist daher nicht nur der Systemdruck wirksam, sondern es steht unter Einwirkung der Drucksteuerung ein höherer Druckgradient zum Ablösen von Verschmutzungen zur Verfügung.

Bei der bekannten Filtervorrichtung weist die Drucksteuereinrichtung ein Absperrelement auf, durch das für einen jeweiligen Rückspülvorgang die Fluidverbindung zwischen dem in das Filtergehäuse einströmenden, zu filtrierenden Fluid und dem betreffenden, rückzuspülenden Filterelement sperrbar ist. Dadurch kommt es bei der vor dem Rückspülvorgang in das Filterelement eintretenden Fluidströmung zu einer Strömungsunterbrechung, so dass die beim Absperrvorgang herrschende Strömungsgeschwindigkeit als strömungsdynamischer Effekt eine Sogwirkung hervorruft. Dadurch steht für das Rückströmen von Filtrat an der Reinseite des betreffenden Filterelementes nicht nur der Systemdruck zur Verfügung, sondern das Rückströmen von Filtrat wird durch die Nachsaugwirkung verstärkt, die aufgrund des dynamischen Effektes zur Verfügung steht, der sich durch das Sperren der Strömung ergibt, die von der Schmutzseite her einströmt.

Die Größe des durch den Absperrvorgang erzielten hydrodynamischen Effekts ist allerdings von der Strömungsgeschwindigkeit abhängig und daher dementsprechend limitiert. Bei Einsatzgebieten, bei denen mit hartnäckigen Verschmutzungen zu rechnen ist, die von der Filterfläche schwer abzulösen sind, besteht daher die Gefahr, dass die hydrodynamisch unterstützte Rückspülwirkung nicht voll zufriedenstellend ist.

Eine zur Erfindung gattungsgleiche Filtervorrichtung ist in der DE 40 30 084 A1 offenbart. Die bekannte Filtervorrichtung weist eine Mehrzahl von Filterelementen, die in einem Filtergehäuse mit einem Filtereinlass für zu filtrierendes Fluid und einem Filterauslass für das gefilterte Fluid aufnehmbar sind, auf, wobei während des Filtrationsvorganges zumindest eines der Filterelemente zum Abreinigen seiner wirksamen Filterfläche mittels einer Rückspüleinrichtung rückspülbar ist, die eine Drucksteuereinrichtung zur Unterstützung der Rückspülung beinhaltet, wobei die Drucksteuereinrichtung einen Hydrospeicher beinhaltet, dessen eine Fluidkammer während des Filtrationsvorganges mit einer Menge an abgereinigtem Fluid befüllbar und für einen Rückspülvorgang über eine Rückspülführung mit der Reinseite des zumindest einen abzureinigenden Filterelements verbindbar ist, und wobei eine weitere Fluidkammer des Hydrospeichers für einen Rückspülvorgang mit einem Mediendruck beaufschlagbar ist, um durch eine dadurch bewirkte Bewegung eines Trennelementes des Hydrospeichers die Füllmenge des abgereinigten Fluids für den Rückspülvorgang zumindest teilweise aus der ersten Fluidkammer wieder abzugeben, wobei die die Menge des abgereinigten Fluids aufnehmende Fluidkammer des Hydrospeichers über eine Drosseleinrichtung befüllbar ist.

Im Hinblick auf diese Problematik stellt sich die Erfindung die Aufgabe, eine Filtervorrichtung zur Verfügung zu stellen, bei der eine durch Drucksteuerung unterstützte, besonders effektive Rückspülwirkung erreichbar ist.

Erfindungsgemäß ist diese Aufgabe durch eine Filtervorrichtung gelöst, die die Merkmale des Patentanspruches 1 in seiner Gesamtheit aufweist.

Gemäß dem Kennzeichen von Anspruch 1 ist vorgesehen, dass sich die Drosseleinrichtung zwischen einem Filtratteil eines Hauptraumes des Filtergehäuses und einer Zuströmleitung der Rückspülführung befindet. Dadurch ist sichergestellt, dass der Füllvorgang jeweils stattfindet, ohne dass durch einen größeren, abgezweigten Volumenstrom ein möglicher Abfall des Systemdruckes mit entsprechender Verringerung des Volumenstromes des aus der Vorrichtung abgegebenen Filtrats eintritt.

Es ist vorgesehen, dass die Drucksteuereinrichtung einen Hydrospeicher beinhaltet, dessen eine Fluidkammer, während die Vorrichtung im Filtrationsbetrieb arbeitet, mit einer Menge an abgereinigtem Fluid befüllbar ist und für einen Rückspülvorgang über eine Rückspülführung mit der Reinseite des jeweils abzureinigenden Filterelements verbindbar ist. Bei einer Druckbeaufschlagung der weiteren Fluidkammer des Hydrospeichers führt die dadurch bewirkte Bewegung des Trennelementes des Hydrospeichers zu einem Ausstoß der Füllmenge des Fluids, das als Spülflüssigkeit über die Rückspülführung zum abzureinigenden Filterelement gelangt.

Durch Wahl des Mediendruckes, der im Hydrospeicher für die Bewegung des Trennelements zur Anwendung gelangt, hat man es in der Hand, die Strömungsgeschwindigkeit der über die Rückspülführung zum Filterelement gelangenden Spülflüssigkeit optimal an die Gegebenheiten anzupassen, d.h. so zu wählen, dass in Anpassung an die Art des Filtermediums die bestmögliche Spülwirkung erreicht wird. Insbesondere bei verhältnismäßig druckfesten Filterelementen, wie konischen oder zylindrischen Spaltsiebrohrelementen, kann im Hydrospeicher mit hohem Druckniveau und damit hohen Strömungsgeschwindigkeiten gearbeitet werden, wodurch selbst hartnäckige Verschmutzungen von der Filterfläche sicher abgelöst werden.

Bei vorteilhaften Ausführungsbeispielen ist die weitere Fluidkammer des Hydrospeichers für den Rückspülvorgang mittels einer Ventilsteuereinrichtung mit einer Mediendruckquelle, insbesondere in Form einer Druckgasquelle, verbindbar. In vielen Fällen kann die Verwendung von Pressluft besonders vorteilhaft sein, beispielsweise wenn die Filtervorrichtung in Verbindung mit Anlagen oder Einrichtungen betrieben wird, bei denen eine Pressluftversorgung vorhanden ist. Es versteht sich, dass andere gasförmige Medien, Gas-Alkoholgemische oder Fluid-Feststoff-Gemische als Druckmedien vorgesehen sein könnten. Ebenfalls könnte, insbesondere bei Unterwassereinrichtungen wie Tiefseebohrungen, Seewasser als unter dem Tiefwasserdruck stehendes Druckmedium benutzt werden.

Bei besonders vorteilhaften Ausführungsbeispielen sind Hydrospeicher und Rückspülführung miteinander verbunden, im Filtergehäuse drehbar angeordnet und für Einstellbewegungen zwischen Filtrationsbetrieb und Rückspülung mittels eines Drehantriebes bewegbar. Eine derartige Anordnung ermöglicht eine besonders einfache und kompakte Bauweise, indem an einem freien und gut zugänglichen Ende des Hydrospeichers ein Antrieb, vorzugsweise in Form eines elektrischen Getriebemotors, angebracht ist, der die Drehbewegung über den Hydrospeicher auf die weiter im Inneren der Vorrichtung gelegene Rückspülführung überträgt und diese in die Drehstellungen einstellt, in denen die Fluidverbindung zum abzureinigenden Filterelement gebildet ist.

In besonders vorteilhafter Weise kann als Hydrospeicher ein Kolbenspeicher vorgesehen sein, der zusammen mit der an einem Zylinderende angeordneten Rückspülführung um die Zylinderachse drehbar ist. Im Vergleich zu anderen Speicherbauarten, wie Membranspeicher, Federspeicher, Balgspeicher oder dergleichen, zeichnet sich der Kolbenspeicher neben einer besonders robusten Bauweise durch ein gutes Verhältnis zwischen Baugröße und aufnehmbarer Füllmenge an gereinigtem Fluid aus, die dem gesamten Hubraum des Kolbens und somit näherungsweise dem Gesamtvolumen des Speicherzylinders entspricht.

In besonders vorteilhafter Weise können die Filterelemente in jeweils einer eigenen Elementkammer aufnehmbar sein, die im Filtergehäuse auf einer die Zylinderachse konzentrisch umgebenden Kreislinie angeordnet sind. Bei dieser konzentrischen Anordnung lässt sich die Anschlussverbindung der einzelnen Elementkammern mit der drehbaren Rückspülführung besonders einfach gestalten.

Mit besonderem Vorteil kann die Anordnung hierbei so getroffen sein, dass die Elementkammern einen ersten, mit der Reinseite des Filterelements verbundenen Kammeranschluss und einen zweiten mit der Rohseite verbundenen Kammeranschluss aufweisen und dass beide dieser Anschlüsse zu einem Hauptraum des Filtergehäuses offen sind, in den hinein sich die drehbare Rückspülführung als Schaltorgan erstreckt, dessen Einstellbewegungen den Zustrom und Abstrom von Fluid zu und vom ersten und zweiten Kammeranschluss für die Rückspülung steuern.

Für eine besonders kompakte Bauweise kann die Rückspülführung zudem als Trennorgan fungieren, das den Hauptraum des Filtergehäuses in einen den Filterauslass aufweisenden Filtratteil und einen den Filtereinlass aufweisenden Unfiltratteil trennt. Bei größeren Filternennweiten mit langen Filterelementen kann es vorteilhaft sein, den Kolbenspeicher in das Schaltorgan der drehbaren Rückspülführung, zwischen dem ersten mit der Reinseite des Filterelements verbundenen Kammeranschluss und dem zweiten mit der Rohseite verbundenen Kammeranschluss zu integrieren, oder sogar extern anzuordnen und mittels eines Kanals für das Rückspülmedium mit dem Umschaltorgan zu verbinden. Hierfür ist die Anordnung so getroffen, dass die Rückspülführung in einem axialen Abstand vom Kolbenspeicher und von ihrem dazu entgegengesetzten Ende einen einen radialen Vorsprung bildenden Ringkörper mit umfänglicher Radialdichtung aufweist, der zusammen mit der Wand des Hauptraumes diesen in Filtratteil und Unfiltratteil auftrennt.

Hinsichtlich der Schaltfunktion, die die Rückspülführung bei ihrer Drehbewegung ausführt, kann die Anordnung so getroffen sein, dass sich die Mündung der ersten und zweiten Kammeranschlüsse der Elementkammern an einer eine Zylinderfläche bildenden Wand des Filtratteils bzw. Unfiltratteils des Hauptraumes befinden und dass bei der Einstellung auf Rückspülen von der Zylinderachse jeweils auskragende Anschlussenden von an der Rückspülführung gebildeter Zuströmleitung und Abströmleitung mit den Kammeranschlüssen zur Deckung gelangen, wobei die Zuströmleitung die Verbindung der ersten Fluidkammer des Kolbenspeichers mit dem ersten Kammeranschluss und die Abströmleitung die Verbindung des zweiten Kammeranschlusses mit einem Rückspülausgang des Hauptraumes bilden.

Vorzugsweise ist der Rückspülausgang mittels einer Ventilanordnung sperrbar und freigebbar.

Hinsichtlich der die Tätigkeit des Hydrospeichers steuernden Ventileinrichtung kann die Anordnung vorteilhaft so getroffen sein, dass ein durch ein Druckmittel betätigbares Ventil, vorzugsweise in Form eines 5/2-WegeVentils, vorhanden ist, das die Verbindung der mit Druckmedium beaufschlagbaren Fluidkammer des Hydrospeichers mit der betreffenden Druckquelle steuert.

Bei einem besonders vorteilhaften Ausführungsbeispiel ist ein weiteres Ventil, vorzugsweise in Form eines 3/2-Wege-Ventils, vorgesehen, das in der Verbindung der Fluidkammer mit der Druckquelle angeordnet ist und einen wahlweisen Abbau des Mediumdruckes ermöglicht.

Nachstehend ist die Erfindung anhand der Zeichnung im Einzelnen erläutert. Es zeigen:
- Fig. 1A bis 1D: schematisch vereinfacht gezeichnete, perspektivische Schrägansichten der erfindungsgemäßen Filtervorrichtung in einer Ausführungsform mit zwei bzw. drei bzw. vier bzw. fünf Filterelementkammern;
- Fig. 2: einen gegenüber Fig. 1 in größerem Maßstab gezeichneten Längsschnitt durch den Zentralbereich einer Elementkammer, wobei der Filtrationsbetrieb verdeutlicht ist;
- Fig. 3: einen der Fig. 2 entsprechenden Längsschnitt, wobei der Betriebszustand der Rückspülung der geschnitten dargestellten Elementkammer verdeutlicht ist;
- Fig. 4: einen gegenüber Fig. 2 und 3 in größerem Maßstab und abgebrochen gezeichneten Teillängsschnitt lediglich des dem Kolbenspeicherventil benachbarten Teilabschnittes des Ausführungsbeispiels; und
- Fig. 5: einen der Fig. 4 ähnlichen Teillängsschnitt, jedoch mit demgegenüber verdrehter Lage der Schnittebene.

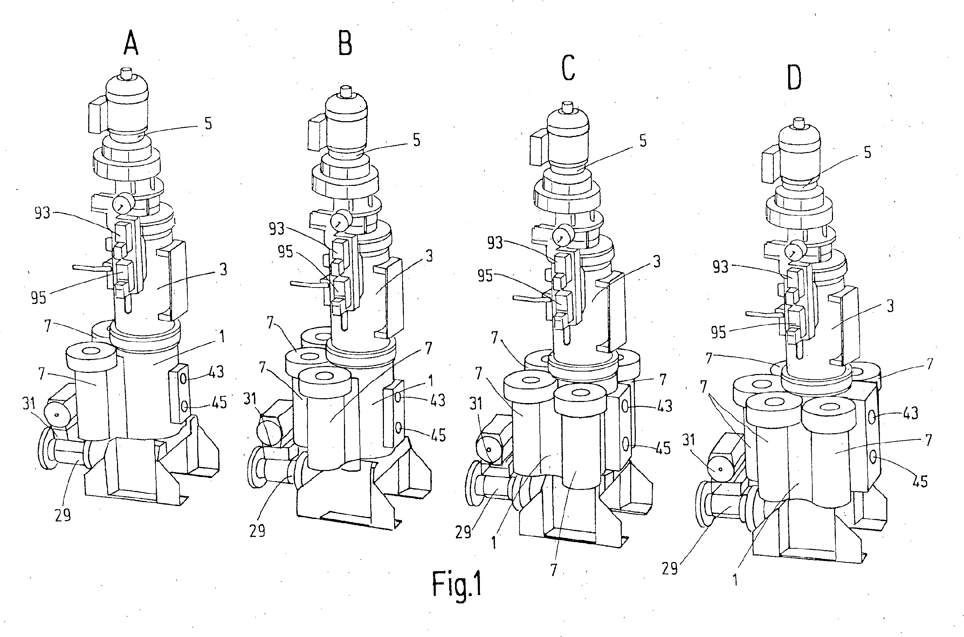

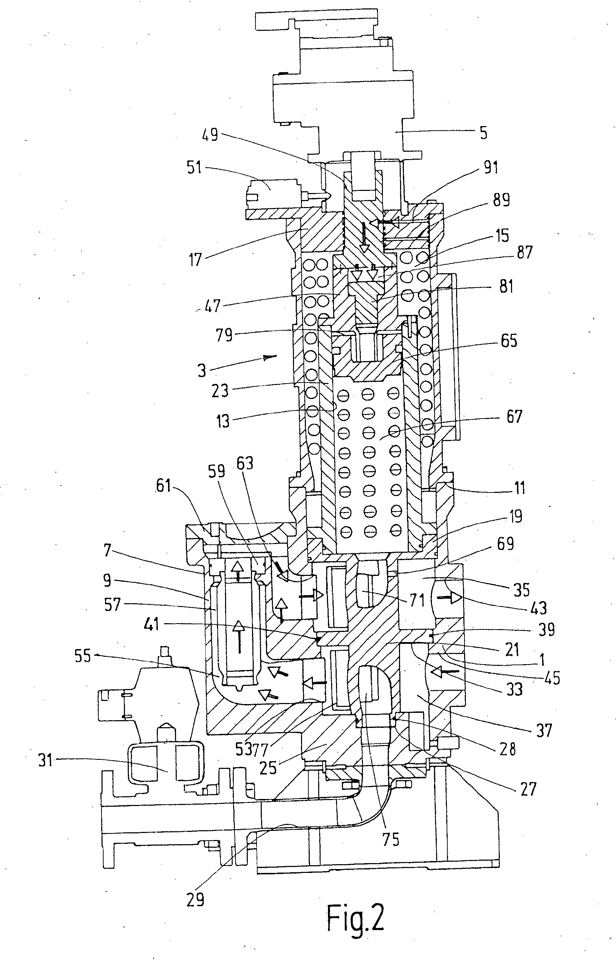

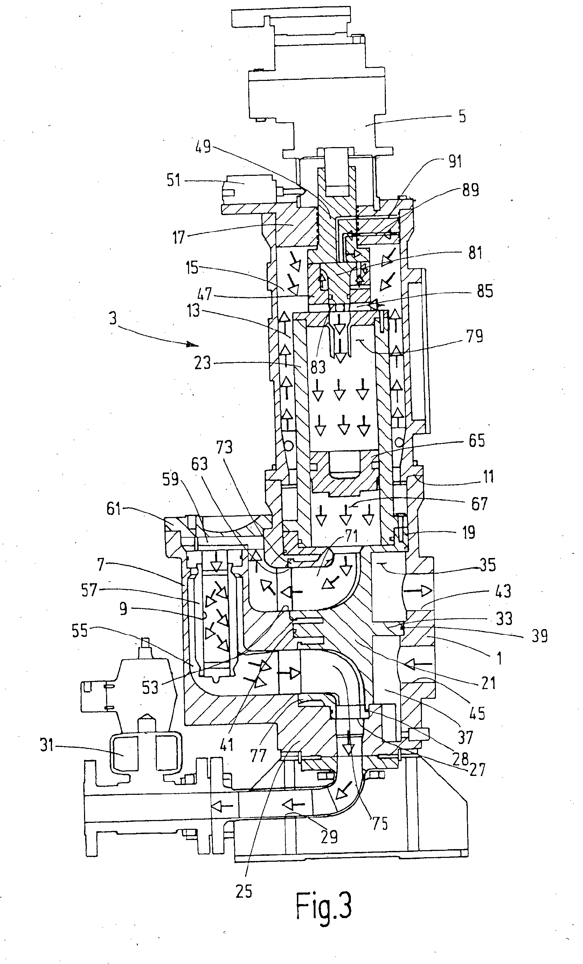

In der Fig. 1, die in den Teilfiguren 1A bis 1D jeweils die Gesamtansicht der erfindungsgemäßen Filtervorrichtung zeigt, sind ein Gehäuse-Hauptteil mit 1, ein Speicherteil mit 3 und ein Antriebsteil mit 5 bezeichnet. Die Fig. 1 verdeutlicht auch, dass die erfindungsgemäße Vorrichtung in der Art eines modularen Baukastensystems für einen Betrieb mit einer unterschiedlichen Anzahl von Filterelementen ausbildbar ist. So zeigt Fig. 1A ein Beispiel mit zwei Filter-Elementkammern 7, in denen jeweils ein Filterelement 9 (Fig. 2 und 3) aufnehmbar ist, während Fig. 1B ein Beispiel mit drei Elementkammern 7, Fig. 1C ein Beispiel mit vier Elementkammern 7 und Fig. 1D ein Beispiel mit fünf Elementkammern 7 zeigen. Ein Filterelement kann auch aus mehreren Filterkerzen in einem Halter gebildet sein.

Wie den Fig. 2 und 3 entnehmbar ist, ist am oberen offenen Ende 11 des Hauptteils 1 das Speicherteil 3 in Form eines Hohlzylinders angeflanscht, innerhalb dessen koaxial ein Kolbenspeicher 13 angeordnet ist, so dass dessen Zylinderachse die Hochachse des Speicherteils 3 definiert. Ein Zwischenraum zwischen der Außenseite des Kolbenspeichers 13 und dem Mantel des Speicherteils 3 bildet einen Gasdruckraum 15, der am oberen Ende durch einen Gehäusedeckel 17 geschlossen ist und am unteren Ende gegenüber dem Gehäuse-Hauptteil 1 durch den Umfangsrand 19 einer Rückspülführung 21 abgedichtet ist, die mit ihrem Umfangsrand 19 eine dichte Einfassung des unteren Endes des Zylinders 23 des Kolbenspeichers 13 bildet.

Die Rückspülführung 21 erstreckt sich vom unteren offenen Ende des Zylinders 23 weg durch einen Hauptraum des Gehäuse-Hauptteils 1 hindurch bis zu dessen Bodenteil 25, an dem sich ein Rückspülauslass 27 befindet, gegenüber dem die Rückspülführung 21 durch ein Dichtelement 28 abgedichtet ist.

An den Rückspülauslass 27 schließt sich eine Rückspülleitung 29 an, die mittels eines Motorventils 31 sperrbar und freigebbar ist. Auf etwa halber Länge zwischen Kolbenspeicher 13 und dem am Rückspülauslass 27 befindlichen Ende weist die Rückspülführung 21 einen einen radialen Vorsprung bildenden Ringkörper 33 auf, der den von der Rückspülführung 21 durchgriffenen Hauptraum des Gehäuse-Hauptteils 1 in ein Filtratteil 35 und ein Unfiltratteil 37 trennt. Für die dichte Trennung weist der Ringkörper 33 eine umfängliche Dichtung 39 auf, die mit der Innenwand 41 des Hauptraums zusammenwirkt. Am Filtratteil 35 befindet sich der Filterauslass 43 für das gefilterte Fluid, und am Unfiltratteil 37 befindet sich der Filtereinlass 45 für zu filterndes Fluid.

Am in der Zeichnung oberen Ende ist der Zylinder 23 des Kolbenspeichers 13 durch ein Endstück 47 geschlossen, dessen oberes Ende mit einem Kupplungsstück 49 verbunden ist, das mit der Ausgangswelle eines Getriebemotors des Antriebsteils 5 verbunden ist. Dadurch ist die gesamte Einheit aus Kolbenspeicher 13 und Rückspülführung 21 gemeinsam innerhalb des Speicherteils 3 und des Gehäuse-Hauptteils 1 drehbar, wobei ein Endschalter 51 zur Kontrolle der Dreheinstellungen vorgesehen ist.

In den Fig. 2 und 3 ist eine der Filter-Elementkammern 7 in der Schnittdarstellung sichtbar. Jede Elementkammer 7 enthält ein Filterelement 9 in der Art einer Filterkerze zylindrischer oder konischer Form. Beispielsweise kann es sich auch um ein sog. Spaltsiebrohrelement handeln. In Fig. 2 ist der Betriebszustand des Filtrationsbetriebs dieses Filterelements 9 dargestellt, wobei, wie mit Strömungpfeilen verdeutlicht, das über den Einlass 45 einströmende Fluid das Unfiltratteil 37 betritt, die Rückspülführung 21 umströmt und über einen Kammeranschluss 53, der sich in der Wand 41 des Gehäuse-Hauptraums befindet, in die Rohseite 55 der Elementkammer 7 gelangt. Von dort durchströmt das Fluid das Filtermedium 57 von außen nach innen zur Reinseite 59 der durch einen Kammerdeckel 61 geschlossenen Elementkammer 7, von wo das gereinigte Fluid über einen Kammeranschluss 63 zur Filtratseite 35 gelangt und über deren Filterauslass 43 aus der Vorrichtung austritt.

Die Fig. 2 zeigt, dass bei diesem Betriebszustand der Filtration sich der Kolben 65 am oberen Ende des Zylinders 23 befindet und die an die Unterseite des Kolbens 65 angrenzende Fluidkammer 67 ihr größtes Volumen besitzt. Hierbei ist die Kammer 67, wie mit Kreissymbolen, die mit Querstrichen versehen sind, angedeutet ist, mit einer Menge an gereinigtem Fluid befüllt, wobei diese Füllmenge während des Filtrationsbetriebs über eine Drossel 69 aus dem Filtratteil 35 heraus in eine Zuströmleitung 71 eintritt, die im Inneren der Rückspülführung 21 ausgebildet ist und an ihrem einen Ende zur angrenzenden Fluidkammer 67 des Kolbenspeichers 13 hin offen ist. Das andere Ende dieser Zuströmleitung 71 bildet ein von der Zylinderachse radial auskragendes Anschlussende 73, das bei dem in Fig. 3 gezeigten Filtrationsbetrieb durch Anlage an der Innenwand 41 des Gehäuse-Hauptteils 1 geschlossen ist.

Am unteren Ende der Rückspülführung 21 bildet diese eine der Bauform der Zuströmleitung 71 entsprechende Abströmleitung 75, die mit dem in der Zeichnung unteren Ende mit der Rückspülleitung 29 verbunden ist und am anderen Ende ebenfalls ein radial auskragendes Anschlussende 77 bildet, das bei der in Fig. 2 gezeigten Drehposition der Rückspülführung 21 ebenfalls, wie das andere Anschlussende 73, durch Anlage an der Wand 41 geschlossen ist.

Bei dem Betriebszustand von Fig. 2 hat die am oberen Ende des Kolbens 65 angrenzende Fluidkammer 79 das kleinste Volumen. Diese Kammer 79 ist für einen Rückspülvorgang, wie er in Fig. 3 dargestellt ist, mit Druckluft beaufschlagbar, die vom Gasdruckraum 15 her über ein Kolbenspeicherventil in die Kammer 79 einströmbar ist. Bei der Darstellung von Fig. 2 befindet sich der innerhalb des Endstückes 47 bewegbare Ventilkolben 81 des Kolbenspeicherventils in seiner Schließposition.

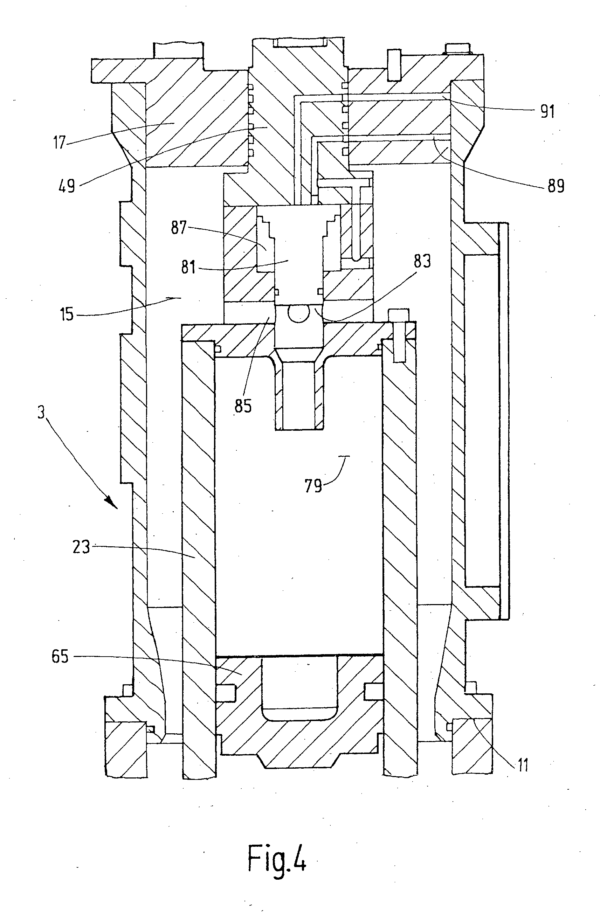

In Fig. 4, die nähere Einzelheiten des Kolbenspeicherventils zeigt, befindet sich dessen Ventilkolben 81 in der nach oben bewegten Öffnungsstellung, bei der seine Steuerkante 83 einen Lufteinlass 85 vom Gasdruckraum 15 her in die Fluidkammer 79 freigibt, um den Speicherkolben 65 nach unten zu treiben. Hierfür ist der Ventilkolben 81 durch Druckaufbau in einer Ventilkammer 87 anhebbar, indem über eine Steuerleitung 89 ein Steuerdruckmedium zugeführt wird. Für die Umschaltung des Kolbenspeicherventils in die Schließposition befindet sich eine zweite Steuerleitung 91, die an der Oberseite des Ventilkolbens 81 in die Ventilkammer 87 mündet.

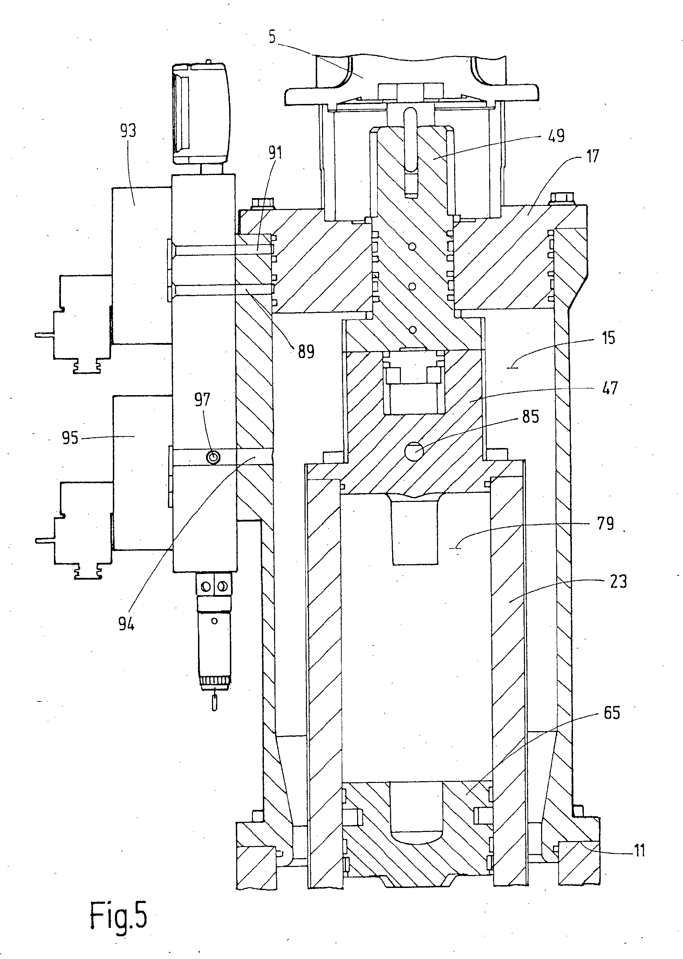

Für die Betätigung des Kolbenspeicherventils sind die Steuerleitungen 89 und 91 mit einem 5/2-Wege-Ventil 93 (Fig. 5) verbunden, das wiederum mit einer Steuerdruckquelle in Verbindung ist, die nicht dargestellt ist. Über einen Druckgasanschluss 94 ist von einem 3/2-Wege-Ventil 95 her Preßluft zum Gasdruckraum 15 zuführbar. Ein Belüftungsanschluss 97 am Wegeventil 95 ermöglicht bei in Öffnungsstellung befindlichem Kolbenspeicherventil einen Abbau des Gasdrucks in der Fluidkammer 79, so dass während des Filtrationsbetriebes die untere Fluidkammer 67 des Kolbenspeichers 13 mit abgereinigtem Fluid über die Drossel 69 befüllbar ist, wobei sich der Speicherkolben 65 nach oben bewegt.

Die Fig. 3 zeigt den Betriebszustand der Rückspülung der in der Darstellung geschnitten dargestellten Elementkammer 7. Wie gezeigt, befindet sich die Rückspülführung 21 in einer Drehposition, bei der sich die Anschlussenden 73 und 77 von Zuströmleitung 71 bzw. Abströmleitung 75 in Deckung mit den Kammeranschlüssen 63 bzw. 53 der Elementkammer 7 befinden. Das Kolbenspeicherventil befindet sich in seiner Öffnungsstellung, so dass, wie mit Strömungspfeilen in Fig. 3 angedeutet, Druckgas in die Fluidkammer 79 des Kolbenspeichers einströmt, den Speicherkolben 65 nach unten bewegt und das in der Fluidkammer 67 befindliche, abgereinigte Fluid als Rückspülmenge über die Zuströmleitung 71 zur Reinseite 59 der Elementkammer 7 gelangt, wobei eine durch den wirkenden Pressluftdruck erzeugte Rückspülströmung hoher Intensität erzeugt wird, die das abzureinigende Filterelement 9 von innen nach außen durchströmt und Schmutzpartikel von der Außenseite des Filtermediums 57 ablöst, um die Verschmutzungen über die Abströmleitung 75 und den Rückspülauslass 27 auszutragen. Für einen solchen Rückspülvorgang ist die Rückspülleitung 29 jeweils über das Motorventil 31 entsperrt. Nachdem der Rückspülvorgang bei Erreichen der unteren Endlage des Speicherkolbens 65 abgeschlossen ist, wird die Rückspülleitung 29 wieder gesperrt, und die Pressluftzufuhr wird mittels des Ventils 95 beendet, während der Ventilkolben 81 des Kolbenspeicherventils in der Offenstellung verbleibt und der Belüftungsanschluss 97 am Wegeventil 95 offen ist, so dass der Pressluftdruck in dem Gasdruckraum 15 und in der Fluidkammer 79 wieder abgebaut wird. Bei dem sich anschließenden Filtrationsbetrieb wird so die Fluidkammer 67 über die Drossel 69 wieder mit gereinigtem Fluid beladen, während sich der Speicherkolben 65 nach oben bewegt. Wenn dies der Fall ist, wird das Kolbenspeicherventil wieder geschlossen, indem der Ventilkolben 81 nach unten bewegt wird, und der Gasdruckraum 15 wird über das Wegeventil 95, bei geschlossenem Belüftungsanschluss 97, wieder mit Pressluft versorgt, so dass die Vorrichtung für einen nachfolgenden Rückspülvorgang bereit ist.

## Patentansprüche

1. Filtervorrichtung mit einer Mehrzahl von Filterelementen (9), die in einem Filtergehäuse (1) mit einem Filtereinlass (45) für zu filtrierendes Fluid und einem Filterauslass (43) für das gefilterte Fluid aufnehmbar sind, wobei während des Filtrationsvorganges zumindest eines der Filterelemente (9) zum Abreinigen seiner wirksamen Filterfläche mittels einer Rückspüleinrichtung (13, 21) rückspülbar ist, die eine Drucksteuereinrichtung (13) zur Unterstützung der Rückspülung beinhaltet, wobei die Drucksteuereinrichtung einen Hydrospeicher (13) beinhaltet, dessen eine Fluidkammer (67) während des Filtrationsvorganges mit einer Menge an abgereinigtem Fluid befüllbar und für einen Rückspülvorgang über eine Rückspülführung (21) mit der Reinseite (59) des zumindest einen abzureinigenden Filterelementes (9) verbindbar ist, und wobei eine weitere Fluidkammer (79) des Hydrospeichers (13) für einen Rückspülvorgang mit einem Mediendruck beaufschlagbar ist, um durch eine dadurch bewirkte Bewegung eines Trennelementes (65) des Hydrospeichers (13) die Füllmenge des abgereinigten Fluids für den Rückspülvorgang zumindest teilweise aus der ersten Fluidkammer (67) wieder abzugeben, wobei die die Menge des abgereinigten Fluids aufnehmende Fluidkammer (67) des Hydrospeichers (13) über eine Drosseleinrichtung (69) befüllbar ist, **dadurch gekennzeichnet, dass** sich die Drosseleinrichtung (69) zwischen einem Filtratteil (35) eines Hauptraumes des Filtergehäuses (1) und einer Zuströmleitung (71) der Rückspülführung (21) befindet.

2. Filtervorrichtung nach Anspruch 1, **dadurch gekennzeichnet, dass** die weitere Fluidkammer (79) des Hydrospeichers (13) für den Rückspülvorgang mittels einer Ventilsteuereinrichtung (81, 93, 95) mit einer Mediendruckquelle, insbesondere in Form einer Druckgasquelle, verbindbar ist.

3. Filtervorrichtung nach Anspruch 1 oder 2, **dadurch gekennzeichnet, dass** Hydrospeicher (13) und Rückspülführung (21) miteinander verbunden, im Filtergehäuse (1, 3) drehbar angeordnet und für Einstellbewegungen zwischen Filtrationsbetrieb und Rückspülung mittels eines Drehantriebes (5) bewegbar sind.

4. Filtervorrichtung nach einem der vorstehenden Ansprüche, **dadurch gekennzeichnet, dass** als Hydrospeicher ein Kolbenspeicher (13) vorgesehen ist, der zusammen mit der an einem Zylinderende (11) angeordneten Rückspülführung (21) um die Zylinderachse drehbar ist.

5. Filtervorrichtung nach einem der vorstehenden Ansprüche, **dadurch gekennzeichnet, dass** die Filterelemente (9) in jeweils einer eigenen Elementkammer (7) aufnehmbar sind, die im Filtergehäuse (1) auf einer die Zylinderachse konzentrisch umgebenden Kreislinie angeordnet sind.

6. Filtervorrichtung nach Anspruch 5, **dadurch gekennzeichnet, dass** die Elementkammern (7) einen ersten, mit der Reinseite (59) des Filterelements (9) verbundenen Kammeranschluss (63) und einen zweiten, mit der Rohseite (55) verbundenen Kammeranschluss (53) aufweisen und dass beide dieser Anschlüsse zu einem Hauptraum des Filtergehäuses (1) offen sind, in den hinein sich die drehbare Rückspülführung (21) als Schaltorgan erstreckt, dessen Einstellbewegungen den Zustrom und Abstrom von Fluid zu und vom ersten (63) und zweiten Kammeranschluss (53) für die Rückspülung steuern.

7. Filtervorrichtung nach einem der vorstehenden Ansprüche, **dadurch gekennzeichnet, dass** die Rückspülführung (21) in einem axialen Abstand vom Kolbenspeicher (13) und von ihrem dazu entgegengesetzten Ende einen einen radialen Vorsprung bildenden Ringkörper (33) mit umfänglicher Radialdichtung (39) aufweist, der zusammen mit einer Wand (41) des Hauptraumes diesen in einen den Filterauslass (43) aufweisenden Filtratteil (35) und einen den Filtereinlass (45) aufweisenden Unfiltratteil (37) trennt.

8. Filtervorrichtung nach Anspruch 6, **dadurch gekennzeichnet, dass** sich die Mündung der ersten und zweiten Kammeranschlüsse (63 bzw. 53) an einer eine Zylinderfläche bildenden Wand (41) des Filtratteils (35) bzw. Unfiltratteils (37) des Hauptraumes befinden und dass bei der Einstellung auf Rückspülen von der Zylinderachse jeweils auskragende Anschlussenden (73, 77) von an der Rückspülführung (21) gebildeter Zuströmleitung (71) und Abströmleitung (75) mit den Kammeranschlüssen (63, 53) zur Deckung gelangen, wobei die Zuströmleitung (71) die Verbindung der ersten Fluidkammer (67) des Kolbenspeichers (13) mit dem ersten Kammeranschluss (63) und die Abströmleitung (75) die Verbindung des zweiten Kammeranschlusses (53) mit einem Rückspülausgang (27) des Hauptraumes bilden.

9. Filtervorrichtung nach Anspruch 8, **dadurch gekennzeichnet, dass** der Rückspülausgang (27) mittels einer Ventilanordnung (31) sperrbar und freigebbar ist.

10. Filtervorrichtung nach einem der Ansprüche 2 bis 9, **dadurch gekennzeichnet, dass** eine Ventilsteuerung ein durch ein Druckmittel betätigbares Ventil, vorzugsweise in Form eines 5/2-Wege-Ventils (93), aufweist, das die Verbindung der mit Druckmedium beaufschlagbaren Fluidkammer (79) des Hydrospeichers (13) mit der betreffenden Druckquelle steuert.

11. Filtervorrichtung nach einem der Ansprüche 2 bis 10, **dadurch gekennzeichnet, dass** ein weiteres Ventil, vorzugsweise in Form eines 3/2-Wege-Ventils (95), über das die Fluidkammer (79) des Hydrospeichers (13) mit der Druckquelle verbindbar ist, einen wahlweisen Abbau des Mediendruckes im Hydrospeicher (13) ermöglicht.

## Claims

1. A filtering apparatus with a plurality of filtering elements (9) which can be accommodated in a filter housing (1) with a filter inlet (45) for the fluid to be filtered and a filter outlet (43) for the filtered fluid, wherein, during the filtration process, at least one of the filtering elements (9) can be back-flushed by means of a back-flushing device (13, 21) containing a pressure-control device (13) for supporting the back-flushing operation, in order to clean the effective filtering surface of said filtering element, wherein the pressure-control device contains a hydraulic accumulator (13), one fluid chamber (67) of which can be filled during the filtration process with a quantity of cleaned fluid and can be connected, via a back-flushing guide (21), to the clean side (59) of the at least one filtering element (9) to be cleaned, for a back-flushing process, and wherein a further fluid chamber (79) of the hydraulic accumulator (13) can be pressurised with a media pressure in order to discharge, again, the filling volume of the cleaned fluid for the back-flushing process, at least in part, from the first fluid chamber (67), by a movement of a separating element (65) of the hydraulic accumulator (13) caused thereby, wherein the fluid chamber (67) of the hydraulic accumulator (13) receiving the quantity of the cleaned fluid can be filled via a regulator means (69), **characterised in that** the regulator means (69) is located between a filtrate part (35) of a main chamber of the filter housing (1) and an inflow line (71) of the back-flushing guide (21).

2. The filtering apparatus according to claim 1, **characterised in that** the further fluid chamber (79) of the hydraulic accumulator (13) can be connected to a media pressure source, in particular in the form of a compressed-gas source by means of a valve control means (81, 93, 95), for the back-flushing operation.

3. The filtering apparatus according to claim 1 or 2, **characterised in that** hydraulic accumulator (13) and back-flushing guide (21) are connected to each other, rotatably arranged inside the filter housing (1, 3), and can be moved to carry out adjustment movements between filtration operation and back-flushing by means of a rotary drive (5).

4. The filtering apparatus according to one of the preceding claims, **characterised in that** a piston accumulator (13) which can be rotated around the cylinder axis together with the back-flushing guide (21) arranged on one cylinder end (11) is provided as hydraulic accumulator.

5. The filtering apparatus according to one of the preceding claims, **characterised in that** the filtering elements (9) can each be accommodated in an individual element chamber (7) thereof, which are arranged in the filter housing (1) along a circular line forming a concentric circumference around the cylinder axis.

6. The filtering apparatus according to claim 5, **characterised in that** the element chambers (7) have a first chamber hook-up (63) connected to the clean side (59) of the filtering element (9) and a second chamber hook-up (53) connected to the untreated side (55), and that both of these hook-ups are open toward a main chamber of the filter housing (1) into which the rotatable back-flushing guide (21) extends as a switching organ, the adjustment movements of which control the inflow and outflow of fluid to and from the first (63) and second chamber hook-ups (53) for the back-flushing operation.

7. The filtering apparatus according to one of the preceding claims, **characterised in that** the back-flushing guide (21) has, at an axial spacing from the piston accumulator (13) and from the opposite end thereto, an annular body (33) forming a radial projection with circumferential radial seal (39) which, together with a wall (41) of the main chamber, separates same into a filtrate part (35) having the filter outlet (43) and a non-filtrate part (37) having the filter inlet (45).

8. The filtering apparatus according to claim 6, **characterised in that** the openings of the first and second chamber hook-ups (63 and 53 respectively) are located on a wall (41) of the filtrate part (35) and non-filtrate part (37) respectively of the main chamber forming a cylinder surface, and that, with the change to back-flushing, the hook-up ends (73, 77) projecting from the cylinder axis, respectively, from the inflow line (71) and outflow line (75), formed on the back-flushing guide (21), become congruent with the chamber hook-ups (63, 53), wherein the inflow line (71) forms the connection of the first fluid chamber (67) of the piston accumulator (13) to the first chamber hook-up (63) and the outflow line (75) the connection of the second chamber hook-up (53) to a back-flushing outlet (27) of the main chamber.

9. The filtering apparatus according to claim 8, **characterised in that** the back-flushing outlet (27) can be blocked and released by a valve apparatus (31).

10. The filtering apparatus according to one of claims 2 to 9, **characterised in that** a valve control has a valve which is actuated by a pressure means, preferably in form of a 5/2-way valve (93) which controls the connection to the fluid chamber (79) of the hydraulic accumulator (13) which can be pressurised with pressure medium, and the respective pressure source.

11. The filtering apparatus according to one of claims 2 to 10, **characterised in that** a further valve, preferably in form of a 3/2-way valve (95), via which the fluid chamber (79) of the hydraulic accumulator (13) can be connected to the pressure source, makes possible an optional reduction of the media pressure inside the hydraulic accumulator (13).

## Revendications

1. Système (1) de filtration, comprenant une pluralité d'éléments (9) filtrants, qui peuvent être reçus dans une enveloppe (1) de filtre, ayant une entrée (45) de filtre pour le fluide à filtrer et une sortie (43) de filtre pour le fluide filtré, dans lequel, pendant l'opération de filtration, au moins l'un des éléments (9) filtrants peut être lavé en retour pour nettoyer sa surface filtrante active au moyen d'un dispositif (13, 21) de lavage en retour, qui comporte un dispositif (13) de commande de la pression pour assister le lavage en retour, dans lequel le dispositif de commande de la pression comporte un accumulateur (13) hydraulique, dont une chambre (67) de fluide peut, pendant l'opération de filtration, être remplie d'une quantité de fluide épurée et peut, pour une opération de lavage en retour, être reliée, par l'intermédiaire d'un conduit (21) de lavage en retour, au côté (59) propre du au moins un élément (9) filtrant à nettoyer, et dans lequel une autre chambre (79) de fluide de l'accumulateur (13) hydraulique peut, pour une opération de lavage en retour, être soumise à une pression de fluide, afin de recéder, par un déplacement ainsi provoqué d'un élément (65) de séparation de l'accumulateur (13) hydraulique, la quantité de remplissage du fluide épuré pour l'opération de lavage en retour, au moins en partie, de la première chambre (67) de fluide, la chambre (67) de fluide, recevant la quantité de fluide épuré, de l'accumulateur (13) hydraulique pouvant être remplie par l'intermédiaire d'un dispositif (69) d'étranglement, **caractérisé en ce que** le dispositif (69) d'étranglement se trouve entre une partie (35) de filtrat d'un espace principal de l'enveloppe (1) de filtre et une ligne (71) d'afflux du conduit (21) de lavage en retour.

2. Système de filtration suivant la revendication 1, **caractérisé en ce que** l'autre chambre (79) de fluide de l'accumulateur (13) hydraulique peut, pour l'opération de lavage en retour, être, au moyen d'un dispositif (81, 93, 95) de soupape, mise en communication avec une source de pression de fluide, notamment sous la forme d'une source de gaz comprimé.

3. Système de filtration suivant la revendication 1 ou 2, **caractérisé en ce que** l'accumulateur (13) hydraulique et le conduit (21) de lavage en retour sont montés tournants en communiquant entre eux dans l'enveloppe (1, 3) de filtre et, pour des déplacements de réglage, peuvent passer entre un fonctionnement en filtration et en lavage en retour au moyen de l'entraînement (5) en rotation.

4. Système de filtration suivant l'une des revendications précédentes, **caractérisé en ce qu'**il est prévu, comme accumulateur hydraulique, un accumulateur (13) à piston, qui peut tourner autour de l'axe d'un cylindre, ensemble avec le conduit (21) de lavage en retour monté à une extrémité (11) du cylindre.

5. Système de filtration suivant l'une des revendications précédentes, **caractérisé en ce que** les éléments (9) filtrants peuvent être reçus chacun dans leur propre chambre (7), qui sont disposées dans l'enveloppe (1) du filtre sur une ligne circulaire entourant concentriquement l'axe du cylindre.

6. Système de filtration suivant la revendication 5, **caractérisé en ce que** les chambres (7) d'éléments ont un premier raccord (63) de chambre, relié au côté (59) propre de l'élément (9) filtrant, et un deuxième raccord (53) de chambre, relié au côté (55) brut, et **en ce que** ces deux raccords sont ouverts vers un espace principal de l'enveloppe (1) de filtre, dans lequel le conduit (21) de lavage en retour tournant s'étend sous la forme d'un organe de commutation, dont les déplacements de réglage règlent, pour le lavage en retour, l'arrivée et la sortie de fluide allant au premier raccord (63) et au deuxième raccord (53) et en revenant.

7. Système de filtration suivant l'une des revendications précédentes, **caractérisé en ce que** le lavage (21) en retour a, à une distance axiale de l'accumulateur (13) à piston et à partir de son extrémité opposée, un corps (33) annulaire formant une saillie radiale et ayant une étanchéité (39) radiale périphérique, qui, ensemble avec une paroi (41) de l'espace principal, sépare celui-ci en une partie (35) de filtrat ayant la sortie (43) du filtre et une partie (37) de non filtrat ayant l'entrée (45) du filtre.

8. Système de filtration suivant la revendication 6, **caractérisé en ce que** l'embouchure du premier et du deuxième raccord (63 et 53) de chambre se trouve sur une paroi (41), formant une surface de cylindre, de la partie (35) de filtrat ou de la partie (37) de non filtrat de l'espace principal et **en ce que**, lors du réglage sur le lavage en retour, des extrémités (73, 77) de raccordement, en porte à faux de l'axe du cylindre, de lignes (71) d'arrivée et de lignes (75) d'évacuation formées sur le conduit (21) de lavage en retour, viennent en coïncidence avec les raccords (63, 53) de chambre, la ligne (71) d'arrivée formant la communication de la première chambre (67) de fluide de l'accumulateur (13) à piston avec le premier raccord (63) de chambre, et la ligne (75) d'évacuation, la communication du deuxième raccord (53) de chambre avec une sortie (27) de lavage en retour de l'espace principal.

9. Système de filtration suivant la revendication 8, **caractérisé en ce que** la sortie (27) de lavage en retour peut être obturée et dégagée au moyen d'un système (31) de soupape.

10. Système de filtration suivant l'une des revendications 2 à 9, **caractérisé en ce qu'**une commande de soupape a une soupape pouvant être actionnée par un fluide sous pression, de préférence sous la forme d'une soupape (93) à 5/2 voies, qui commande la communication avec la source de pression concernée de la chambre (79) de fluide, pouvant être alimentée en fluide sous pression, de l'accumulateur (13) hydraulique.

11. Système de filtration suivant l'une des revendications 2 à 10, **caractérisé en ce qu'**une autre soupape, de préférence sous la forme d'une soupape (95) à 3/2 voies, par laquelle la chambre (79) de fluide de l'accumulateur (13) hydraulique peut communiquer avec la source sous pression, permet un établissement, au choix, de la pression de fluide dans l'accumulateur (13) hydraulique.
